(19) Europäisches Patentamt
European Patent Office
Office européen des brevets

(11) **EP 1 460 462 B1**

(12) **EUROPEAN PATENT SPECIFICATION**

(45) Date of publication and mention
of the grant of the patent:
**06.08.2008 Bulletin 2008/32**

(51) Int Cl.:
***G02B 6/35*** (2006.01)

(21) Application number: **04006723.3**

(22) Date of filing: **19.03.2004**

(54) **Mems optical latching switch**

Verriegelbarer optischer Mems Schalter

Commutateur optique mems à verrouillage

(84) Designated Contracting States:
**DE FR GB**

(30) Priority: **19.03.2003 US 456086 P**
**19.03.2003 US 456063 P**
**12.11.2003 US 712203**

(43) Date of publication of application:
**22.09.2004 Bulletin 2004/39**

(73) Proprietor: **Xerox Corporation**
**Rochester,**
**New York 14644 (US)**

(72) Inventors:
• **Kubby, Joel A.**
**Rochester, NY 14622 (US)**
• **Feinberg, Kathleen A.**
**Rochester, NY 14617 (US)**
• **German, Kristine A.**
**Webster, NY 14580 (US)**
• **Gulvin, Peter M.**
**Webster, NY 14580 (US)**
• **Ma, Jun**
**Penfield, NY 14526 (US)**
• **Lin, Pinyen**
**Rochester, NY 14618 (US)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**WO-A-02/091025          US-A1- 2002 118 084**

• **BAKKE T ET AL: "PLANAR MICROOPTOMECHANICAL WAVEGUIDE SWITCHES" IEEE JOURNAL OF SELECTED TOPICS IN QUANTUM ELECTRONICS, IEEE SERVICE CENTER, US, vol. 8, no. 1, January 2002 (2002-01), pages 64-72, XP001116246 ISSN: 1077-260X**

## Description

## BACKGROUND

This invention relates to multiple state optical latching switches.

The telecommunications industry is undergoing dramatic changes with increased competition, relentless bandwidth demand, and a migration toward a more data-centric network architecture. First generation point-to-point wave division multiplex systems have eased the traffic bottleneck in the backbone portion of a network. As a new cross-connect architecture moves the technology closer to the subscriber side of the network, operators are challenged to provide services at the optical layer, calling for more flexible networks that can switch and reroute wavelengths. This is placing great emphasis and demand for wavelength agile devices.

The need to provide services "just in time" by allocation of wavelengths, and further migration of the optical layer from the high-capacity backbone portion to the local loop, is driving the transformation of the network toward an all optical network in which basic network requirements will be performed in the optical layer.

The optical network is a natural evolution of point-to-point dense wavelength division multiplexing (DWDM) transport to a more dynamic, flexible, and intelligent networking architecture to improve service delivery time. The main element of the optical network is the wavelength (channel), which will be provisioned, configured, routed, and managed in the optical domain. Intelligent optical networking will be first deployed as an "opaque" network in which periodic optical-electrical conversion will be required to monitor and isolate signal impairments. Longer range, the optical network will evolve to a "transparent" optical network in which a signal is transported from its source to a destination totally within the optical domain.

A key element of the emerging optical network is an optical add/drop multiplexer (OADM). An OADM will drop or add specific wavelength channels without affecting the through channels. Fixed OADMs can simplify the network and readily allow cost-effective DWDM migration from simple point-to-point topologies to fixed multi-point configurations. True dynamic OADM, in which reconfiguration is done in the optical domain without optical-electrical conversion, would allow dynamically reconfigurable, multi-point DWDM optical networks. This dynamically reconfigurable multi-point architecture is slated to be the next major phase in network evolution, with true OADM an enabling network element for this architecture.

On chip integration of optical switching and planar light circuits has the potential to greatly reduce the size and manufacturing costs of multi-component optical equipment such as Reconfigurable Optical Add/Drop Multiplexers (ROADMs). Current costs for Reconfigurable Optical Add/Drop Multiplexers (ROADMs) are $1,000 per channel, limiting their use to long-haul optical telecommunications networks. In order to extend their use into the metropolitan network the cost will need to be decreased by an order of magnitude to $100 per channel, without sacrificing performance.

One solution to decreasing cost is through the integration of components, where the primary cost savings will be in packaging. A number of approaches are being pursued for optical integration using Planar Light have Circuit (PLC) technologies. The majority of approaches use a silica-on-silicon platform with the ROADM formed from the integration of silica Arrayed Waveguide Gratings (AWG's) for multiplexing and demultiplexing, with Thermo-Optic (TO) switches for performing the add/drop and pass of the demultiplexed signal. The use of a low-index contrast silica-on-silicon platform severely limits the yield of these components due to the requirement for uniform thick oxide films over large areas to form the waveguides. The use of TO switches limits the extensibility due to high-power requirements and thermal cross-talk.

A number of different materials and switching technologies are being explored for fabricating chip-scale photonic lightwave circuits such as AWG's for demultiplexers and multiplexers, Variable Optical Attenuators (VOA's) and Reconfigurable Optical Add-Drop Multiplexers (ROADMs). The main material platforms include silica wafers, silica-on-silicon substrates using both thin film deposition and wafer bonding techniques, polymer waveguides defined on silicon substrates, and silicon-on-insulator substrates. The main switching technologies include Mach-Zehnder interferometers based on either a thermo-optic or electro-optic effect, and MEMS mechanical waveguide switches.

While silica waveguides have optical properties that are well matched to the optical properties of conventional single mode fibers, and thus couple well to them, they require thick cladding layers due to the low index of refraction contrast between the waveguide core and cladding materials, making them difficult to fabricate using planar processing techniques for fabrication and integration with other on-chip optical devices. The low index of refraction contrast, $\Delta n$, between core and cladding also requires large bending radii to limit optical loss during propagation through the photonic lightwave circuit, leading to large chip footprints and low die yields (<50%).

In addition, silica based waveguide switches are typically based on Mach-Zehnder interference using thermo-optic effects, that have a limited Extinction Ratio (ER) of around 25-30 dB, require significant power due to the low thermo-optic coefficient of silica, have problems with thermal cross-talk between the different optical channels and have a sinusoidal rather than a digital optical response. They also lose their switching state when power is lost.

What is needed is a Silicon-On-Insulator (SOI) platform for monolithically integrating optical, mechanical and electrical functions. The use of a silicon platform enables fabrication of components using the vast infrastructure and process development available for semiconductor IC manufacturing at silicon foundries. By fabricating the MEMS switches and waveguides in the same material, single crystal silicon, there are no stress and strain issues as exist with heterogeneous materials sets such as silica-on-silicon. Fabrication in silicon also allows for integration with CMOS microelectronics for control and sensing capabilities, and for free-carrier plasma dispersion effects to enable signal leveling using integrated VOA's. The high index contrast of silicon (n = 3.5) enables the ridge waveguide structures to make tight turns with minimum optical bending loss, decreasing overall chip size to centimeter dimensions.

Bakke at al., in a paper entitled "Planar Microptomechanical Waveguide Switches", IEEE Journal on Selected Topics in Quantum Electronics, Vol. 8, No. 1, pages 64-72, describe a microoptomechanical waveguide switching means based on a lateral deflection of cantilever beam. The switching means includes a voltage-controlled drive actuator, a single waveguide on the cantilever and an optical slab with stationary waveguides formed thereon; however the switch overshoots and ringing is present.

US 2002/118084 A1 discloses a latchying mechanism for a MEMS actuator that maintains a mirror of an optical switch in its actuated position even in the event of a power interruption by means of a pair or clamps. The clamps may be realised by a post and slot technique. The switch device further includes drive and latch actuators, and a voltage source configured to actuate said actuators.

## SUMMARY

An optical micro-electro-mechanical system (MEMS) switch is disclosed according to claim 1. In a preferred embodiment the optical MEMS switch is used as an M x N optical signal switching system. The optical MEMS switch comprises a plurality of optical waveguides formed on a flexible cantilever beam platform for switching optical states wherein the state of the optical switch is changed by a system of drive and latch actuators. The optical MEMS device utilizes a latching mechanism in association with a thermal drive actuator for aligning the cantilever beam platform. In use the optical MEMS device may be integrated with other optical components to form planar light wave circuits (PLCs). When switches and PLCs are integrated together on a silicon chip, compact higher functionality devices, such as Reconfigurable Optical Add-Drop Multiplexers (ROADMs), may be fabricated.

In one embodiment of the optical multiple state latching switch, said flexible cantilever beam platform is pulled or pushed by said drive actuators.

In a further embodiment said flexible cantilever beam platform can be deflected bi-directionally.

In a further embodiment said flexible cantilever beam platform has mechanical features to increase or reduce the stiffness of said flexible cantilever beam platform.

In a further embodiment said latching switch is fabricated in the device layer of an SOI wafer.

In a further embodiment said latching switch is fabricated in the device layer of an SOI wafer and released by sacrificial etching of the buried oxide layer.

## BRIEF DESCRIPTION OF THE DRAWINGS

The drawings are not to scale and are only for purposes of illustration.

**FIG. 1** is a cut away top plane view of an optical MEMS (Micro Electro Mechanical System) switch;

**FIG. 2** is an enlarged view of a portion of **FIG. 1** for illustrative purposes;

**FIG. 3** is a side cross-sectional view of **FIG. 2**;

**FIG. 4** is a graphically view of a timing diagram for controlling a latch and drive switch shown in **FIGS. 1** and **2**;

**FIG. 5** is a top plane view showing the latch actuated to an open position;

**FIG. 6** is a top plane view showing the drive switch actuated to an overshoot position;

**FIG. 7** is a top plane view showing the latching mechanism in the latched position;

**FIG. 8** is a cut away top plane view of an optical MEMS device with a "hook" hitch and latch teeth in accordance with an embodiment of the present invention;

**FIG. 9A** is an enlarged view of a portion of **FIG. 8** detailing the "hook" hitch in an equilibrium state;

**FIG. 9B** is an enlarged view of a portion of **FIG. 8** detailing the latch teeth in an equilibrium state;

**FIG. 10A** is an enlarged view of a portion of **FIG. 8** detailing the "hook" hitch in a first switch state;

**FIG. 10B** is an enlarged view of a portion of **FIG. 8** detailing the latch teeth in a first switch state;

**FIG. 11A** is an enlarged view of a portion of **FIG. 8** detailing the "hook" hitch in a second switch state; and

**FIG. 11B** is an enlarged view of a portion of **FIG. 8** detailing the latch teeth in a second switch state.

## DETAILED DESCRIPTION

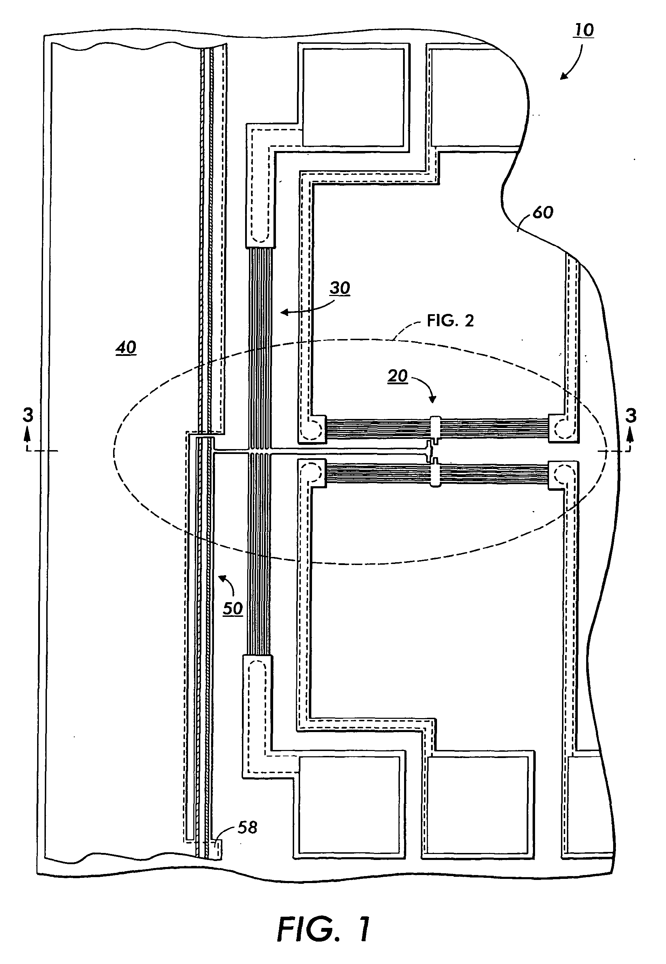

Referring now to **FIG. 1** there is shown a top plane view of an optical MEMS (Micro Electro Mechanical System) switch **10**. All optical and moving mechanical components shown are fabricated in the single-crystal silicon device layer of a SOI wafer using a self-aligned process. The optical MEMS switch **10** utilizes a latching mechanism **20** in association with a thermal drive actuator **30** for aligning a flexible cantilever beam platform **50** fixed at one end **58**. The flexible cantilever beam defines one or more movable waveguides for switching to one or more stationary waveguides defined on an optical slab **40**. The components fabricated in the device layer of an SOI wafer may be released by sacrificial etching of the buried oxide layer. In use the optical MEMS switch **10** may be integrated with planar light wave circuits (PLCs). When switches and PLCs are integrated together on a silicon chip higher functionality devices, such as Reconfigurable Optical Add-Drop Multiplexers (R-OADM), may be fabricated.

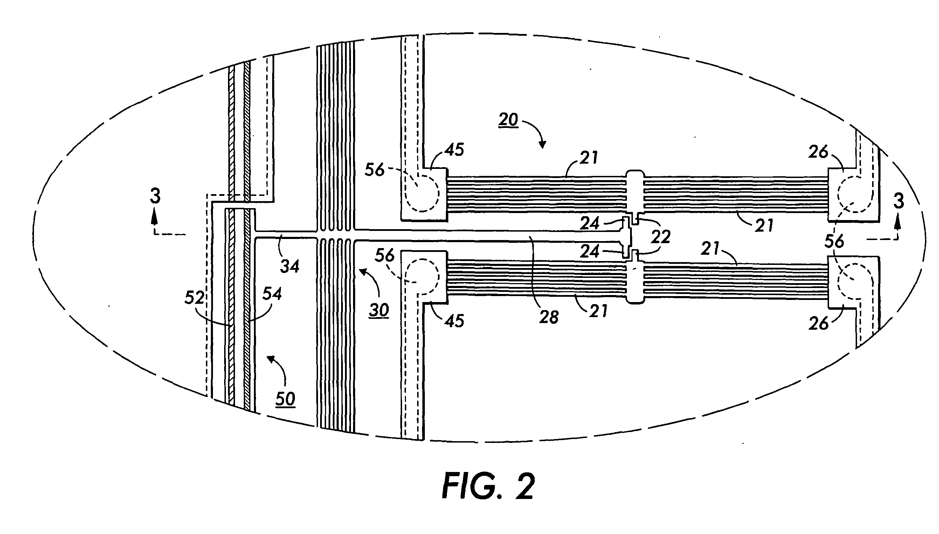

As shown in **FIGS. 1** through **3**, the optical switch **10** comprises one or more thermal drive actuators **30** having associated during fabrication one or more thermal latch actuators **21**, each thermal latch actuator **21** supporting translating latch teeth **22**. The flexible cantilever beam platform **50** defines a plurality of optical waveguides **52** and **54**. A tether **34** connects the one or more thermal drive actuators **30** to the flexible cantilever beam platform **50**. A linkage **28** connects the thermal drive actuators **30** to a set of linkage teeth **24** wherein the linkage teeth **24** are contacted by the latch teeth **22** when the latch is engaged. The linkage teeth **24** and latch teeth **22** are spatially located to determine one or more latched state positions wherein electrical stimuli are timed to actuate the thermal drive **30** and thermal latch actuators **21** so as to switch between equilibrium and latched states as will be more fully described below.

The optical MEMS switch **10** is applicable as an optical switch in a variety of applications, such as optical fiber transmission networks, to route optical signals along various signal paths. Switches are typically characterized by the number of input and output ports, referred to as MxN. For example, a 1x3 switch would switch one input between three outputs. MxN switches have previously been implemented using waveguide shuttles or by cascading a series of M 1xN cantilever switches. While shuttle switches can provide the MxN switching functionality, they require at least two gaps in the optical pathway, which leads to increased optical losses. Similarly, a series of M cascaded cantilever switches would have M optical gaps which leads to increased optical losses for M>1. By fabricating an MxN cantilever beam waveguide switch, where a cantilever beam carrying M waveguides is deflected rather than a waveguide shuttle, only one optical gap is required in the optical pathway, cutting the optical loss associated with propagation through the gaps in half. Alternatively M cantilever beams, each carrying a single waveguide, can be flexibly connected so that they all actuate together. Furthermore, reflections from the two gaps associated with a shuttle can cause additional losses due to interference.

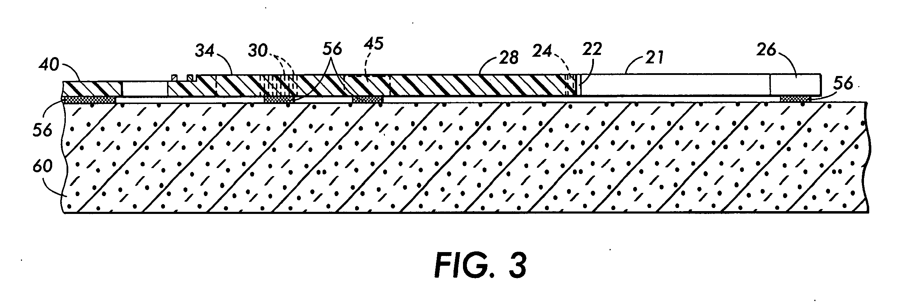

Turning once again to **FIGS. 1** through **5** there is shown the optical switch **10** with two optical waveguides **52** and **54** formed on the flexible cantilever beam platform **50** for switching between two stationary optical waveguides **42** and **44**, respectively. This configuration enables two optical signals to be switched at the same time. By including additional optical waveguides, additional signals may be switched simultaneously. The ability to switch multiple signals at the same time is important in many optical applications. For example, in an R-OADM (Reconfigurable Optical Add/Drop Multiplexer), when an input signal is dropped, a new signal can be added to the output. Since the add/drop function always occurs simultaneously, it is possible to decrease the number of required optical switches by implementing a single cantilever switch that performs the add drop function on both the input signal, sending it to the drop line, and the add signal, sending it to the switch's output. Referring to **FIG. 3**, the optical multiple state latching switch **10** uses oxide anchors **56** to attach components to the substrate **60**. As well known in the art, polysilicon anchors can be utilized instead of oxide. Polysilicon can also be used to fabricate dimples, as commonly practiced in MEMS to avoid stiction.

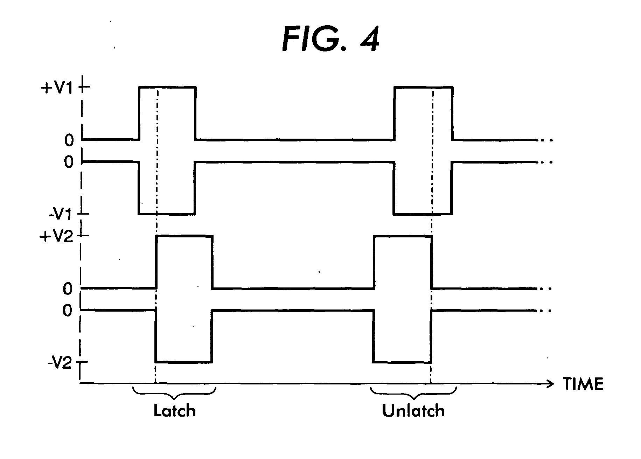

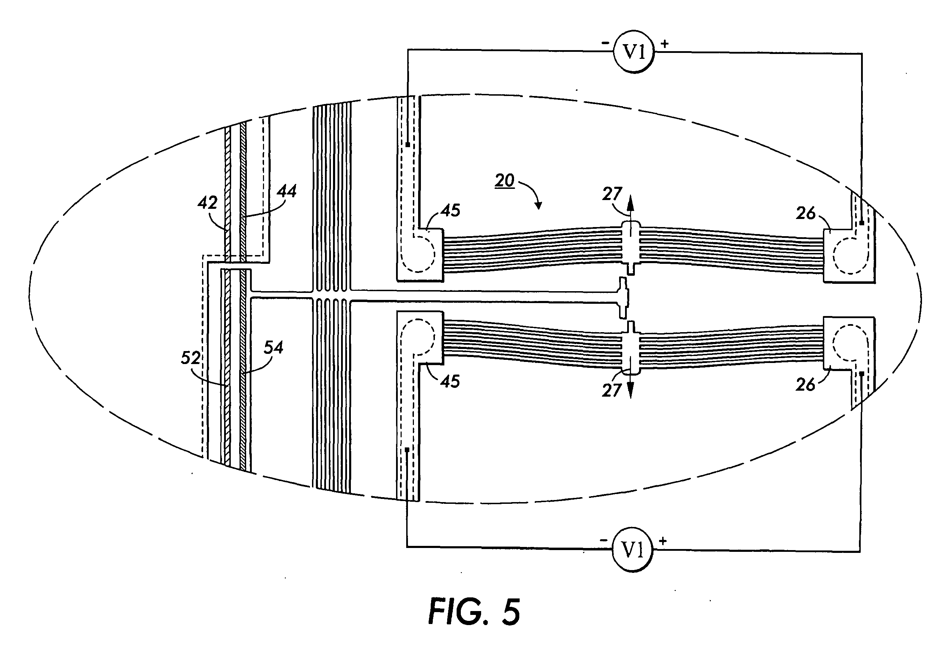

Referring now to **FIG. 4** there is graphically illustrated the timing sequence of the signals used to actuate the drive and latch mechanisms for the 2x2 switch illustrated in **FIG. 1**, where the voltages are labeled in **FIG. 4** assuming the potential of the handle wafer or base substrate **60** is zero. The first portion of the timing diagram shows the latching sequence. The first step in the latching sequence is to apply a voltage +V1 to one end **26** of each latch actuator **21**, and a voltage -V1 to the other end **45** of each latch actuator **21**. The voltages on the latch actuators induce ohmic heating in the actuator beams, causing thermal expansion and the subsequent opening (direction **27**) of the latch as shown in **FIG. 5**. While the latch actuator voltage is still applied, the drive actuator **30** is stimulated with a voltage + V2 at one end **31** and a voltage -V2 at the other end **33**.

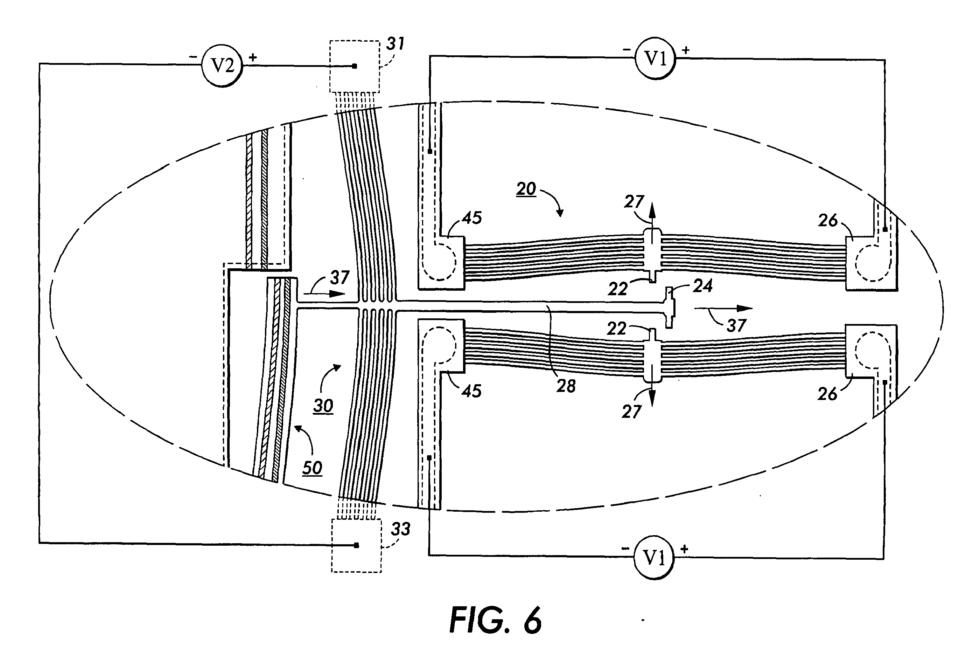

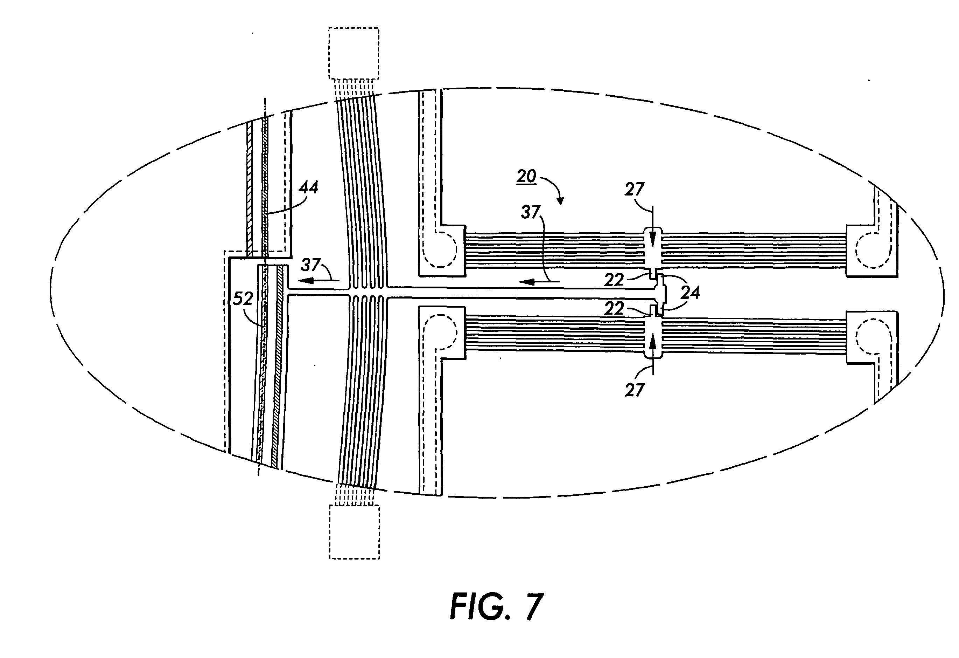

**FIG. 6** shows how the resulting thermal expansion of the drive actuator **30** is sufficient to move the flexible cantilever beam platform **50** and linkage **28** far enough to the right for the linkage teeth **24** to be well to the right side of the latch teeth **22**. Next the latch actuator voltages return to zero, and the latch closes. To finish the latching sequence, the drive actuator voltages return to zero. As the drive actuator cools, the linkage teeth **24** are drawn in tension (direction **37**) against the latch teeth **22** which holds the switch in the desired latched position as shown in FIG. **7**. To return the switch to its original state, the same sequence of voltages are applied in the reverse timing, as shown in the unlatch portion of **FIG. 4**. Unlike switches with no latching capability, the optical MEMS latching switch **10** only consumes power during a change of state, and preserves its state, even if power is interrupted.

It should be noted that, although the timing diagram shown in **FIG. 4** depicts square wave voltage pulses, this depiction is meant to be illustrative only of the basic timing, and does not preclude the use of other waveforms. Furthermore, the voltages applied to the thermal actuators need not be symmetric about zero. However, the use of equal but opposite polarity pulses, as described above, results in a constant zero voltage at the center of each actuator throughout the latch and unlatch cycle, which reduces electrostatic forces between the actuators and the handle wafer **60**.

A logic table for the 2x2 switching function is as follows:

State One: Add/Drop function, as shown in **FIG. 5**

The left movable waveguide **52** (input) is optically aligned to the left stationary waveguide **42** (drop).

The right movable waveguide **54** (add) is optically aligned to the right stationary waveguide **44** (output).

State Two: Pass function, as shown in **FIG. 7**

The left movable waveguide **52** (input) is optically aligned to the right stationary waveguide **44** (output).

In order to change from state one to state two, a force F can be applied by a thermal drive actuator **30**. In order to deflect the free end by a distance δx, a force F must be applied where F is given by:

$$F = (Ea^3b/4L^3)\delta x$$

Where E is Young's modulus (E = 1.65 x 10$^5$ μN/ μm$^2$ for single crystal silicon), a is the thinner cross-sectional dimension of the beam **21**, b is the thicker cross-sectional dimension of the beam and L is the length of the beam. For example, a 1000 μm long beam that is 5 μm thick and 20 μm wide would require a force of 13.2 μN to deflect the free end by 8 μm, which is sufficient deflection to switch a cantilever beam with two 4 μm waveguides.

The switching force F can be applied to the free end of the cantilever beam **50,** or at an intermediate location, or locations as required. The switch can also be actuated in the opposite direction by applying a force F from the thermal drive actuator **30** in the opposite direction. In some cases it may be preferable to not use the equilibrium position of the cantilever beam, since these do not have a strong restoring force that returns them to this position since the cantilever beam may be quite long and flexible. Instead only deflected positions may be desirable to use. In addition, it may be advantageous to angle the receiving waveguides to better match the direction of propagation of the light leaving the deflected cantilever beam.

Since the cantilever beam carrying multiple waveguides could be wider than it is thick, it could suffer undesirable out of plane deflections since it is less stiff out of plane than it is in plane, as predicted by the formula

$$K = (Ea/4)(b/L)^3$$

As an example for a beam that is 5 μm thick and 20 μm wide, the ratio of the stiffness in the horizontal direction of the vertical direction is (20/5)$^2$. The beam is 16 times stiffer in the horizontal direction relative to the vertical direction.

In order to avoid out of plane deflections the appropriate location along the cantilever beam **50** may be attached to a switch tether **34** so as to minimize these out of plane deflections. The beam's width may also be decreased at certain points to decrease its stiffness in the horizontal direction (e.g. serrated). Joints can be added to make the beam more flexible in the horizontal direction. The beam can be deflected bi-directionally to decrease the magnitude of the required deflection. The beam can be thickened or stiffened to make it less flexible in the out-of-plane direction (e.g. by making the beam thicker or by adding superstructures such as additional beams).

The switches and the waveguides are made together on a single crystal silicon wafer using widely available semiconductor processing equipment. Such on-chip integration avoids the complex alignment issues associated with manually connecting different and larger components with optical fibers, and avoids the cost and space associated with manufacturing, assembling and packaging the separate components of optical switches. On-chip integration with other components can drive down the cost of manufacturing switches and installation of these complicated devices by a factor of ten or more. Currently, these components cost over $1,000 per channel.

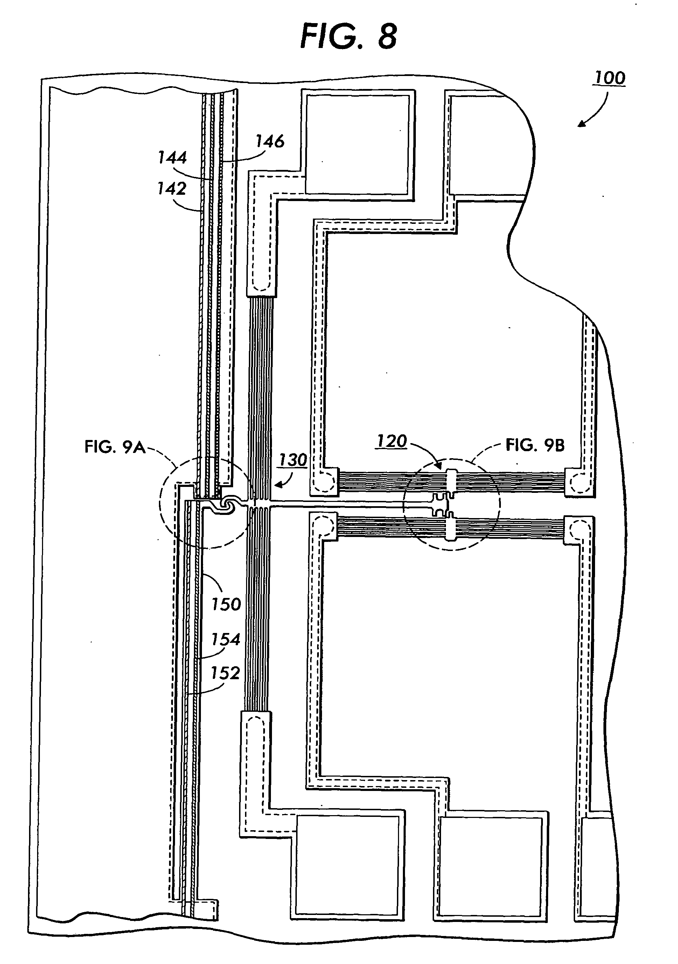

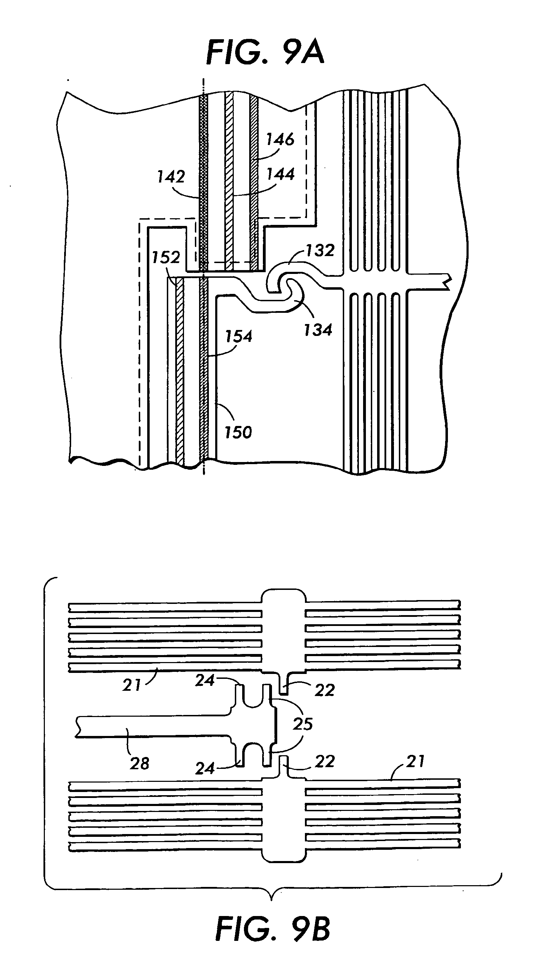

**FIGS. 8** through **11** shows two extensions **100** of the system embodiment depicted in **FIG. 1**. The first extension is to a higher order of switching, from 2x2 in **FIG. 1** to 2x3 in **FIG. 8**. The second option, namely the present invention, shown in **FIG. 9A** is the introduction of a "hook"-hitch **132** and **134** instead of a simple tether. These two extensions are discussed below.

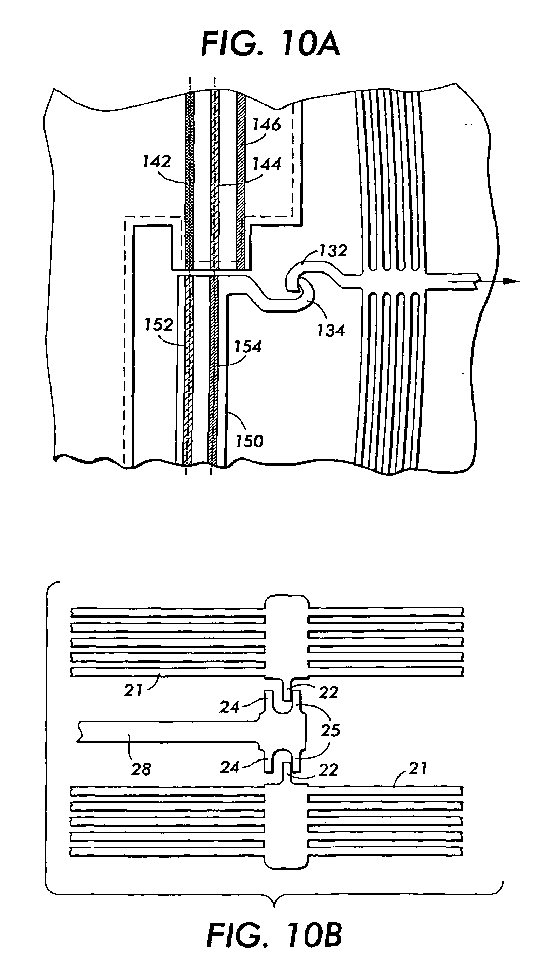

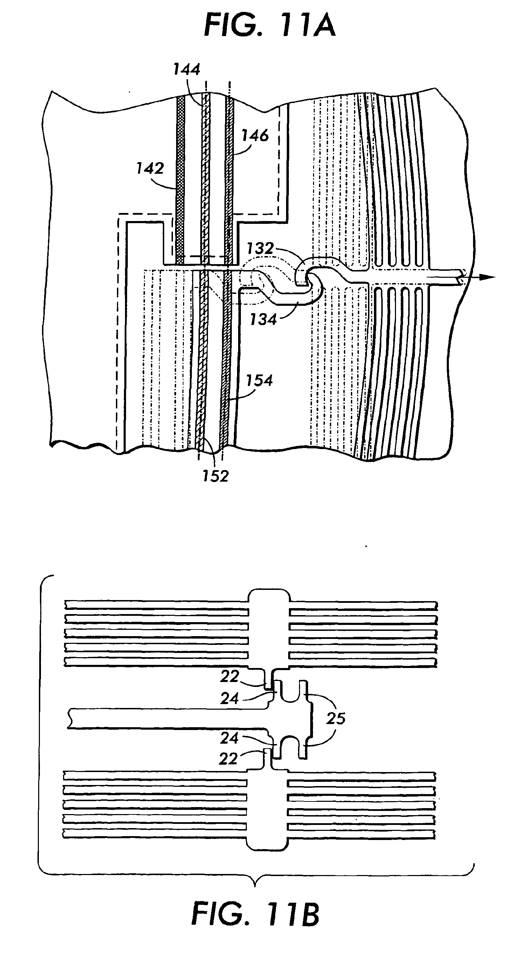

To increase the system from a 2x2 switch to a 2x3 switch, two additional elements are required. The first is another stationary waveguide platform defining stationary waveguides **142, 144** and **146** respectively. The second element is an extra pair of teeth **25** on the linkage **28** located after the teeth set **24** as shown in **FIG. 9B**. For the initial state of the 2x3 switch, the latch teeth are disengaged as shown in **FIG. 9B.** In this position, the right most moveable waveguide **154** is aligned with the left most stationary waveguide **142** as shown in **FIGS. 8** and **9A**. Using an actuation sequence similar to the latching phase shown and described in **FIG. 4,** the switch can be moved to a second state as shown in **FIG. 10B**. Here the latch teeth **22** defined by the latch actuator **21** engage between the pair of teeth **24** and **25** on the linkage **28**, and the two movable waveguides **152** and **154** are aligned with the left most pair of stationary waveguides **142** and **144** respectively, as shown in **FIG. 10A**. A third state can be achieved by executing another latching sequence with higher voltages on the drive. In this state, depicted in **FIGS. 11A** and **11B**, the latch teeth **22** engage behind the pair of linkage teeth **24** and the two moveable waveguides **152** and **154** now align with the right most pair of stationary waveguides **144** and **146**.

The 2x3 switch example discussed above, is one embodiment of the general ability to achieve NxM switching for small values of N and M. Each NxM configuration requires a sufficient number of fixed and movable waveguides. Further design considerations may be accounted for to achieve the desired set of switch positions. These include the initial relative alignment and spacing of the moveable and stationary waveguides, as well as, the number and relative location of the linkage teeth.

The present invention shown in **FIGS. 8** through **11** entails is the substitution of an interlocking "hook" hitch **132** and **134** for the tether **34**. Depending on the embodiment and fabrication processes employed, the "hook" hitch may be used to mitigate the affects of stresses that may degrade the switch performance. For example, if the process were to induce stress in the drive actuator **30**, the stress could be transferred through a tether **34**, and impact the equilibrium state alignment of the waveguides. The "hook" hitch mechanically decouples the drive actuator **130** from the moveable waveguide platform 150 in the equilibrium state, thereby eliminating any transferred stress that would induce a misalignment in the equilibrium state.

The "hook" hitch also mitigates stresses that occur in latched states that lead to undesirable rotations in the linkage. As the unanchored end of the cantilevered waveguide platform is pulled to the right, the translational motion of the platform is accompanied by a small clockwise rotation due to the bending of the cantilevered platform. If a simple tether is used, the rotation of the waveguide platform bends the tether **34**, which in turn causes a counter clockwise rotation of the linkage **28**, and may also asymmetrically distort the drive actuator. The rotation of the linkage and asymmetric distortion of the actuator is most severe in systems that require larger displacements. The "hook" hitch, however, provides a good counter measure for these issues. As seen in **FIG. 11A** the "hook" hitch combination **132** and **134** provides a pivot point at the contact point between the left hook **134** attached to the cantilevered waveguide beam platform and the right hook **132** attached to the thermal drive actuator. The "hook" hitch thereby decouples the rotational motion of the cantilevered waveguides from the rest of the system, allowing the linkage and drive to operate without induced rotations.

The invention may be embodied in other specific forms without departing from its essential characteristics. The described embodiments are to be considered in all respect only as illustrative and not restrictive. The scope of the invention is, therefore, indicated by the appended claims, rather than by the foregoing description. All changes which come within the meaning and range of equivalency of the claims are to be embraced within their scope.

**Claims**

1. An optical multiple state latching switch (100), comprising:

one or more drive actuators (130);
one or more latch actuators (120) defining associated latch teeth (22);
an optical slab with stationary waveguides (142, 144, 146) formed thereon;
a flexible cantilever beam platform (150) with a plurality of movable optical waveguides (152, 154) formed thereon;
a hook-hitch (132, 134) for engaging said drive actuator (130) and said flexible cantilever platform (150);
a linkage (28) connecting said drive actuator (130) to linkage teeth (24) located to determine one or more latched state positions; and
a voltage source configured to actuate said one or more drive and latch actuators (130; 120) so as to change between equilibrium and latched states.

2. The optical multiple state latching switch (100) according to claim 1, wherein said flexible cantilever beam platform (150) is pulled or pushed by said one or more drive actuators (130).

3. The optical multiple state latching switch (100) according to claim 1, wherein said flexible cantilever beam platform (150) can be deflected bidirectionally.

4. The optical multiple state latching switch (100) according to claim 1, wherein said flexible cantilever beam platform (150) has mechanical features to increase or reduce the stiffness of said flexible cantilever beam platform (150).

5. The optical multiple state latching switch (100) according to claim 1, wherein said latching switch (100) is fabricated in the device layer of an SOI wafer.

6. The optical multiple state latching switch (100) according to claim 1, wherein said latching switch (100) is fabricated in the device layer of an SOI wafer and released by sacrificial etching of the buried oxide layer.

7. The optical multiple state latching switch (100) according to claim 1, wherein said voltage source is configured to apply voltages to the ends of said one or more drive and latch actuators (130; 120) that are symmetric about zero.

**Patentansprüche**

1. Ein optischer Mehrzustands - Klinkenschalter (100), der umfasst:

einen oder mehrere Antriebsaktuatoren (130);
einen oder mehrere Klinkenaktuatoren (120), die damit assoziierte Klinkenzähne (22) definieren;

eine optische Platte mit stationären Wellenleitern (142, 146), die darauf ausgebildet sind;

eine Plattform (150) für einen flexiblen Gelenkträger mit einer Mehrzahl an beweglichen optischen Wellenleitern (152, 154), die darauf ausgebildet sind;

eine Hakenkopplung (132, 134) zum Verbinden des genannten Antriebsaktuators (130) mit der genannten Plattform (150) für einen flexiblen Gelenkträger;

eine Verbindung (28), die den genannten Antriebsaktuator (130) mit Verbindungszähnen (24) verbindet, die so positioniert sind, dass sie eine oder mehrere Positionen eines eingeklinkten Zustands bestimmen; und

eine Spannungsquelle, die dazu ausgebildet ist, den genannten einen oder die genannten mehreren Antriebs- und Klinkenaktuatoren (130; 120) so zu betreiben, dass zwischen Gleichgewichts- und eingeklinkten Zuständen gewechselt wird.

2. Der optische Mehrzustands - Klinkenschalter (100) gemäß Anspruch 1, in dem die genannte Plattform (150) für einen flexiblen Gelenkträger durch den genannten einen oder die genannten mehreren Antriebsaktuatoren (130) gezogen oder gedrückt wird.

3. Der optische Mehrzustands - Klinkenschalter (100) gemäß Anspruch 1, in dem die genannte Plattform (150) für einen flexiblen Gelenkträger in zwei Richtungen ausgelenkt werden kann.

4. Der optische Mehrzustands - Klinkenschalter (100) gemäß Anspruch 1, in dem die genannte Plattform (150) für einen flexiblen Gelenkträger mechanische Merkmale aufweist, um die Steifigkeit der genannten Plattform (150) für einen flexiblen Gelenkträger zu erhöhen oder zu verringern.

5. Der optische Mehrzustands - Klinkenschalter (100) gemäß Anspruch 1, in dem der genannte Klinkenschalter (100) in der Bauteilschicht eines SOI - Wafers ausgebildet ist.

6. Der optische Mehrzustands - Klinkenschalter (100) gemäß Anspruch 1, in dem der genannte Klinkenschalter (100) in der Bauteilschicht eines SOI - Wafers ausgebildet ist und durch Opferätzen der vergrabenen Oxidschicht freigelegt wird.

7. Der optische Mehrzustands - Klinkenschalter (100) gemäß Anspruch 1, in dem die genannte Spannungsquelle dazu ausgebildet ist, Spannungen an den Enden des genannten einen oder der genannten mehreren Antriebs- und Klinkenaktuatoren (130;

120) anzulegen, die bezüglich ungefähr Null symmetrisch sind.

## Revendications

1. Commutateur optique à verrouillage à états multiples (100), comprenant:

un ou plusieurs actionneurs de commande (130);

un ou plusieurs actionneurs de verrouillage (120) définissant des dents de verrouillage associées (22);

une plaque optique avec des guides d'ondes stationnaires (142, 144, 146) formés par dessus;

une plateforme de poutre à extrémité libre flexible (150) avec une pluralité de guides d'ondes optiques mobiles (152, 154) formés par dessus;

un attelage à crochet (132, 134) pour engager ledit actionneur de commande (130) et ladite plateforme à extrémité libre flexible (150);

une liaison (28) reliant ledit actionneur de commande (130) à des dents de liaison (24) situées afin de déterminer une ou plusieurs positions à l'état verrouillé; et

une source de tension configurée pour actionner ledit un ou plusieurs actionneurs de commande et de verrouillage (130; 120) de manière à changer entre un état d'équilibre et un état verrouillé.

2. Commutateur optique à verrouillage à états multiples (100) selon la revendication 1, dans lequel ladite plateforme de poutre à extrémité libre flexible (150) est tirée ou poussée par ledit un ou lesdits plusieurs actionneurs de commande (130).

3. Commutateur optique à verrouillage à états multiples (100) selon la revendication 1, dans lequel ladite plateforme de poutre à extrémité libre flexible (150) peut être déviée de manière bidirectionnelle.

4. Commutateur optique à verrouillage à états multiples (100) selon la revendication 1, dans lequel ladite plateforme de poutre à extrémité libre flexible (150) a des caractéristiques mécaniques pour accroître ou réduire la rigidité de ladite plateforme de poutre à extrémité libre flexible (150).

5. Commutateur optique à verrouillage à états multiples (100) selon la revendication 1, dans lequel ledit commutateur à verrouillage (100) est réalisé dans la couche de dispositif d'une tranche SOI.

6. Commutateur optique à verrouillage à états multiples (100) selon la revendication 1, dans lequel ledit commutateur à verrouillage (100) est réalisé dans la couche de dispositif d'une tranche SOI et libéré par une gravure sacrificielle de la couche d'oxyde enterrée.

7. Commutateur optique à verrouillage à états multiples (100) selon la revendication 1, dans lequel ladite source de tension est configurée pour appliquer des tensions aux extrémités dudit un ou desdits plusieurs actionneurs de commande et de verrouillage (130; 120) qui sont symétriques par rapport à zéro.

FIG. 1

*FIG. 2*

**FIG. 3**

EP 1 460 462 B1

## FIG. 4

FIG. 5

FIG. 6

EP 1 460 462 B1

FIG. 7

# FIG. 8

## FIG. 9A

## FIG. 9B

## FIG. 10A

## FIG. 10B

## FIG. 11A

## FIG. 11B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002118084 A1

**Non-patent literature cited in the description**

- **BAKKE.** Planar Microptomechanical Waveguide Switches. *IEEE Journal on Selected Topics in Quantum Electronics,* vol. 8 (1), 64-72